# EUROPEAN PATENT SPECIFICATION

(11) **EP 1 598 565 B1**
(45) Date of publication and mention of the grant of the patent: **13.07.2011**
(21) Application number: 05076059.4
(22) Date of filing: 06.05.2005
(51) Int. Cl.: F16B 12/30

(54) **Means for fastening for a bearing modular structure**
Befestigungsmittel für modulare Tragestruktur
Moyens de fixation pour une structure modulaire portante

(30) Priority: 18.05.2004 IT MO20040118
(43) Date of publication of application: 23.11.2005
(73) Proprietor: Fami S.R.L., 36027 Rosà (VI) (IT)
(72) Inventor: Camellini, Giancarlo, San Cesario sul Panaro (Modena) (IT)
(74) Representative: Gotra, Stefano

(56) References cited:
- US-A- 3 187 693

## Description

The invention relates to a modular bearing structure, preferably applied in the field of shelving. The invention is particularly applicable to installations on vehicles such as vans or trucks. The prior art teaches bearing structures for realising shelving which generally comprise four uprights provided with a series of openings by means of which a plurality of superposed planes are bolted to the uprights at different levels, at their corners. The height at which the various shelves are positioned can be varied using the through-holes in the uprights for fastening of bolts.

US-A-3187693 discloses a bearing structure comprising shelves mounted on uprights by means of brackets. The brackets, which are engageable with skirts bordering the shelves, are also predisposed to be fastened to the uprights.

Modular structures of the above-described type exhibit some drawbacks. The use of the bolts requires having a sufficient free space available around the structure for manoeuvring the bolts. The manoeuvring space is not always available, especially if the structure is to be mounted in special "made-to-measure" housings, for example in vehicles. The precision of the mounting of the structure depends, among other conditions, on the correct positioning of the planes with respect to the uprights. This requires that the bolts for fastening a plane are located at a same height as the rest plane of the uprights. The holes in the uprights are specially made for this purpose, being slots, so that the position of the bolts can be regulated vertically up until the desired position of the planes is reached. The mounting of the structure is therefore rather slow and laborious.

Other, more elaborate types of bearing modular structures are known, provided with rapid attachment elements which do not require the use of bolts to block the planes with respect to the uprights. Though these structures simplify the assembly stage, they are considerably more complex during the construction stage of the various components which must be provided with special seatings and/or projection, complementary to one another and predisposed to enable a reciprocal fastening of the components themselves.

The main aim of the present invention is to provide a modular bearing structure which obviates the drawbacks in known-type structures.

An advantage of the inventions that it does not require the use of bolts for fastening the planes and is thus easily installable even in small spaces, as well as "made to measure" spaces, in which it not at all easy to manoeuvre tools.

A further advantage of the invention is that the assembly of the structure is extremely rapid and precise, as the correct positioning of the various components derives from the conformation of the connection elements among the components, which require no manual adjustment operations.

A further advantage of the invention is that the components that define the structure are simple to realise, as they do not require a complex conformation provided with special seatings and/or projections for joining.

Further characteristics and advantages of the present invention will better emerge from the detailed description that follows, of a preferred but nonlimiting example of the means for fastening a modular structure of the invention, in a preferred but non-exclusive embodiment thereof, illustrated by way of example in the accompanying figures of the drawings, in which:
Figure 1 is a schematic perspective view of a first embodiment of the structure of the present invention;
Figures 2, 3, 4, 5 show a detail of the structure of figure 1 in different structure assembly stages;
Figures 6 and 7 are two further embodiments of the structure of the present invention.

With reference to the figures of the drawings, the bearing modular structure of the invention comprises at least two uprights 2 which are parallel and at least a crossbar 3 having a longitudinal axis, which crossbar 3 is removably connected to the uprights 2 at at least a connection portion 3a. The connection portion 3a is predisposed to be brought up to a surface portion 2a of at least one of the two uprights 2.

The crossbar 3 is connected to the upright 2 by means for fastening which comprise at least a bracket 4 having a joint portion 4a and a fastening portion 4b. The bracket 4 is predisposed to be joint-connected, by a joint portion 4a thereof, to the connecting portion 3a of the crossbar 3 and to the surface portion 2a of the upright 2 in such a way as to stably connect therebetween the crossbar 3 and the upright 2. The bracket 4 is further predisposed to be fixed removably, by its fastening portion 4b, to the crossbar 3.

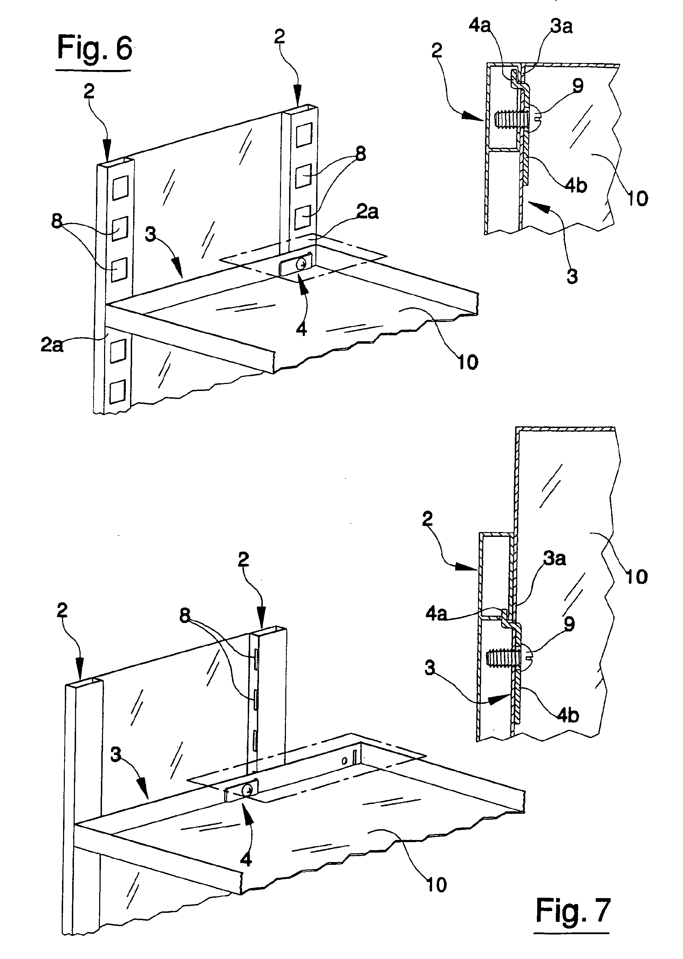

As can be seen in the figures of the drawings, the structure preferably comprises four uprights 2, arranged at the corners of a right-angled quadrilateral, and two crossbars 3, parallel to one another, removably connected to the opposite pairs of uprights 2. The crossbars 3 support a rest plane 10 and each of them is connected, by two brackets 4, to two uprights 2 at at least two connecting portions 3a which, in a preferred embodiment, are arranged at ends of the crossbar 3. The connecting portions 3a, as illustrated in figure 7, can however be located at any intermediate point of the crossbar 3, in relation to special conditions relating to the installation of the structure.

The bracket 4 is constituted by a slim and elongate element which exhibits a double transversal bend by 90°, which realises two consecutive and practically parallel tracts 40, 42, connected by a tract 41 which is perpendicular thereto. The fastening portion 4b is defined by a first tract 40 of the consecutive and parallel tracts, while the joint portion 4a is defined by the perpendicular tract 41 which connects the two consecutive and parallel tracts and by a second perpendicular tract 42. The bracket 4 has overall a straight development which is interrupted at an end by an S-bend which divides the first tract 40, which is overall straight, from the second tract 42, which is parallel to the first tract 40. In a first embodiment of the structure, illustrated in figures from 1 to 6, each bracket 4 is arranged in proximity of a corner formed between a crossbar 3, an upright 2 and a rest plane 10. To facilitate manipulation, each bracket 4 comprises a further manoeuvring portion 43 which is perpendicular to the fastening portion 4b. In figures from 6 to 8 a further embodiment of the structure is illustrated, in which the brackets 4 are not arranged in proximity of the corners and are without the manoeuvring portions 43.

The uprights 2 each comprise at least one seating 8, predisposed to receive at least a tract of the joint portion 4a of the bracket 4. The seating 8 is located in proximity of the surface portion 2a of the upright 2. At least a portion of the seating 8 is afforded through the surface of the upright 2. In a preferred embodiment, illustrated in the figures of the drawings, the uprights 2 exhibit a hollow section, with a thin wall. The seating 8 is constituted in this case by a through-hole afforded through the thin wall of the upright 2. In this preferred embodiment, the uprights 2 exhibit a plurality of seatings 8 which are vertically aligned, in order that the crossbars can be fixed at various heights.

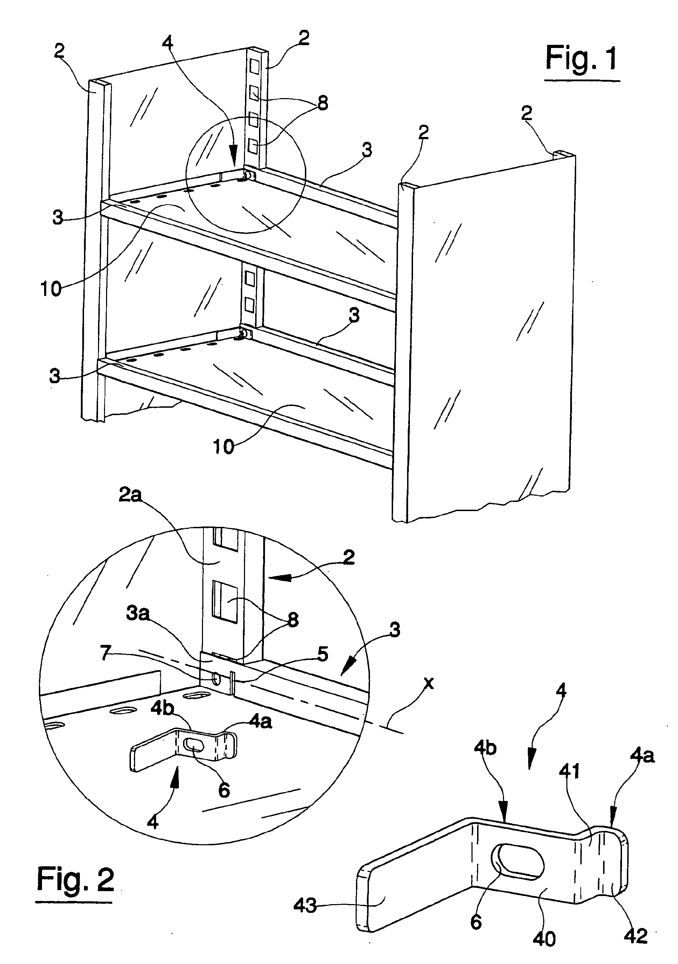

In greater detail, in the preferred embodiment the uprights 2 have a right-angled quadrangular section. The seatings 8 can be arranged on a face of the uprights 2 which is parallel to the longitudinal axis x of the crossbar 3 (figures 1 to 6), or on a face of the uprights 2 which is perpendicular to the longitudinal axis x of the crossbar 3 (figure 7).

The crossbar 3 exhibits at least a through-housing 5 which is afforded in one of the connecting portions 3a. In the preferred embodiment each connecting portion 3a is constituted by a thin tract of the crossbar 3 in which a housing 5 is arranged which is constituted by a through-hole. For 9 fastening the crossbar 3 to the uprights 2, each connecting portion 3a is brought up to a corresponding surface portion 2a of an upright 2 in such a way that the housing 5 faces the seating 8.

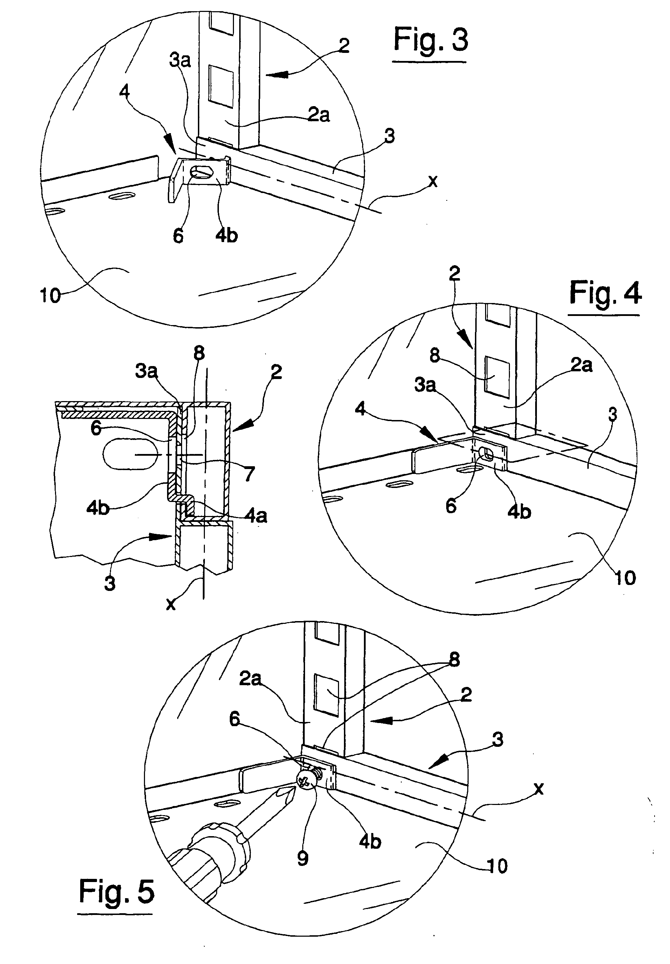

The bracket 4 is predisposed to be inserted, at its joint portion 4a, in a seating 8 and a housing 5 facing each other, and with the fastening portion 4b brought up to the crossbar 3. As can be seen in the detail in section of figure 4, the bracket 4 is positioned with the perpendicular tract 41 arranged through the housing 5 and the seating 8, with the second tract 42 arranged internally of the upright 2 and with the first tract 40 brought up to the connecting portion 3a of the crossbar 3. With the bracket 4 arranged in the described way, i.e. in the structure "blocking" position, at least the connecting portion 3a of the crossbar 3 at which the housing 5 is arranged is comprised between the surface portion 2a of the upright 2 and the fastening portion 4b of the bracket 4. Each bracket 4 thus functions as a fastening element, blocking and stabilising the structure.

When the bracket 4 is in the structure-blocking position, the fastening portion 4b of the bracket 4 and the connecting portion 3a of the crossbar 3 are fixable to each other by means of a removable fastening element. In more detail, the fastening portion 4b of the bracket 4 has a through-slot 6 which faces a through hole 7 afforded in the connecting portion 3a of the crossbar 3. This removable fastening element is constituted by a screw 9 inserted in the through-slot 6 and screwed into the through hole 7. The screw 9 can be self-tapping, or the through hole 7 can be threaded. There is also a coupling between the screw 9 and a nut blocked in a cage; the nut stays within the overall mass of the uprights 2. The stable connection between the brackets 4 and the respective crossbars 3 fixes each bracket 4 in a position in which it is subjected to a shearing load in the direction of its width, due to the weight supported by its planes 10. Thus the weight supported can be relatively substantial.

The structure of the invention offers important advantages.

Firstly, assembly of the structure is extremely rapid and precise, as the correct positioning of the various components derives from the conformation of the brackets and the relative seatings in the crossbars and uprights, and does not require any manual adjustment operations. A further advantage of the invention is that the brackets, the uprights and the crossbars which define the structure are simple to make, as they do not require a complex conformation provided with special seatings and/or projections predisposed for obtaining a reciprocal joint.

A further important advantage of the invention is that the assembly of the structure does not require the use of bolts or other projecting elements. Thanks to the presence of the brackets, all of the structure is contained within the uprights and crossbars, and it is therefore easy to install even where space is very limited.

## Claims

1. A modular bearing structure, comprising at least two parallel uprights (2) and at least a crossbar (3), provided with a longitudinal axis (x), which is removably connected to the uprights (2) at at least a connecting portion (3a) which is predisposed to be brought up into contact with a surface portion (2a) of at least one of the at least two uprights (2), the at least a crossbar (3) being connected to the upright (2), by means for fastening, the means for fastening comprising at least a bracket (4), provided with a joint portion (4a) and a fastening portion (4b); the bracket (4) being predisposed to be removably fixed, by the fastening portion (4b) thereof, to the crossbar (3);
the bracket (4) is constituted by a slim and elongate element which exhibits a double transversal bend of about 90°, by which two consecutive tracts (40, 42) are defined which are parallel and connected one to another by a tract (41) which is perpendicular thereto, the fastening portion (4b) being defined by a first (40) of the two tracts, the joint portion (4a) being defined by the perpendicular tract (41) and by a second tract (42) of the parallel tracts;
**characterized in that**
each of the at least two uprights (2) comprise at least a seating (8) which is predisposed to receive at least a tract (41) of the joint portion (4a) of the bracket (4), at least a portion of the seating (8) being afforded in a surface of the upright (2), the seating (8) being arranged in proximity of the surface portion (2a) of the upright (2);
the at least a crossbar (3) exhibits at least a through-housing (5) which is afforded in the crossbar (3) at the connecting portion (3a) thereof, in such a way that the through-housing (5) faces the seating (8); the perpendicular tract (41) of said bracket (4) being arranged through the through-housing (5) and the seating (8).

2. The structure of claim 1, **characterised in that** the at least a bracket (4) is predisposed to insert, at the joining portion (4a) thereof, in a housing (5) and a seating (8), with the fastening portion (4b) thereof located against the crossbar (3), so that at least the connecting portion (3a) of the crossbar (3) where the housing is located (5) is comprised between the surface portion (2a) of the upright (2) and the fastening portion (4b) of the bracket (4).

3. The structure of claim 2, **characterised in that** the fastening portion (4b) of the bracket (4) and the connecting portion (3a) of the crossbar (3) are fixed one to another by a removable connecting element.

4. The structure of claim 3, **characterised in that**: the fastening portion (4b) of the bracket (4) affords a through slot (6) which faces a through hole (7) afforded on the connecting portion (3a) of the crossbar (3); the removable connecting element being constituted by a screw (9) which is inserted in the through slot (6) and which screws into the through hole (7).

5. The structure of any one of the preceding claims, **characterised in that** it comprises four uprights (2), arranged at corners of a rectangular quadrilateral, and two parallel crossbars (3) which are removably connected to oppositely-located pairs of the uprights (2), the crossbars (3) supporting a rest plane (10) and being connected, at at least two connecting portions (3a) situated at ends thereof, to two uprights by two brackets (4).

## Patentansprüche

1. Modulare Tragestruktur, umfassend mindestens zwei parallele Ständer (2) und mindestens einen Querträger (3), versehen mit einer Längsachse (x), der abnehmbar mit den Ständern (2) an mindestens einem Verbindungsabschnitt (3a) verbunden ist, der so ausgelegt ist, dass er mit einem Oberflächenabschnitt (2a) von mindestens einer der mindestens zwei Ständer (2) in Berührung gebracht wird, wobei der mindestens eine Querträger (3) mit dem Ständer (2) durch Befestigungsmittel verbunden ist und die Befestigungsmittel mindestens einen Bügel (4) umfassen, versehen mit einem Kupplungsabschnitt (4a) und einem Befestigungsabschnitt (4b); wobei der Bügel (4) so ausgelegt ist, dass er abnehmbar durch seinen Befestigungsabschnitt (4b) am Querträger (3) fixiert ist;
der Bügel (4) besteht aus einem schlanken und länglichen Element, das eine doppelte transversale Krümmung von zirka 90° aufweist, durch die zwei aufeinanderfolgende Teilstücke (40, 42) definiert werden, die parallel verlaufen und miteinander durch ein Teilstück (41) verbunden sind, das senkrecht dazu angeordnet ist, wobei der Befestigungsabschnitt (4b) durch ein erstes (40) der beiden Teilstücke definiert ist und der Kupplungsabschnitt (4a) durch das senkrecht angeordnete Teilstück (41) sowie durch ein zweites Teilstück (42) der parallel verlaufenden Teilstücke definiert ist;
**dadurch gekennzeichnet, dass**
jeder der mindestens zwei Ständer (2) mindestens einen Sitz (8) umfasst, der ausgelegt ist, um mindestens ein Teilstück (41) des Kupplungsabschnitts (4a) des Bügels (4) aufzunehmen, wobei mindestens ein Abschnitt des Sitzes (8) in einer Oberfläche des Ständers (2) ausgebildet ist und der Sitz (8) in der Nähe des Oberflächenabschnitts (2a) des Ständers (2) angeordnet ist;
der mindestens eine Querträger (3) mindestens ein Durchgangsgehäuse (5) aufweist, das im Querträger (3) an dessen Verbindungsabschnitt (3a) so ausgebildet ist, dass das Durchgangsgehäuse (5) dem Sitz (8) gegenüber angeordnet ist; wobei das senkrecht verlaufende Teilstück (41) des genannten Bügels (4) durch das Durchgangsgehäuse (5) und den Sitz (8) angeordnet ist.

2. Struktur nach Anspruch 1, **dadurch gekennzeichnet, dass** der mindestens eine Bügel (4) eingerichtet ist, um an dessen Kupplungsabschnitt (4a) in ein Gehäuse (5) und einen Sitz (8) eingesetzt zu werden, wobei dessen Befestigungsabschnitt (4b) gegen den Querträger (3) angeordnet ist, sodass mindestens der Verbindungsabschnitt (3a) des Querträgers (3), an dem sich das Gehäuse befindet (5), zwischen dem Oberflächenabschnitt (2a) des Ständers (2) und dem Befestigungsabschnitt (4b) des Bügels (4) umfasst ist.

3. Struktur nach Anspruch 2, **dadurch gekennzeichnet, dass** der Befestigungsabschnitt (4b) des Bügels (4) und der Verbindungsabschnitt (3a) des Querträgers (3) aneinander durch ein abnehmbares Verbindungselement befestigt sind.

4. Struktur nach Anspruch 3, **dadurch gekennzeichnet, dass**: der Befestigungsabschnitt (4b) des Bügels (4) einen Durchgangsschlitz (6) aufweist, der einem Durchgangsloch (7) gegenüber angeordnet ist, das am Verbindungsabschnitt (3a) des Querträgers (3) angeordnet ist; wobei das abnehmbare Verbindungselement aus einer Schraube (9) besteht, die in den Durchgangsschlitz (6) eingesetzt und in das Durchgangsloch (7) eingeschraubt ist.

5. Struktur nach einem der vorhergehenden Ansprüche, **dadurch gekennzeichnet, dass** sie vier Ständer (2) umfasst, die an Ecken eines rechteckigen Vierecks angeordnet sind, sowie zwei parallel verlaufende Querträger (3), die abnehmbar mit gegenständig angeordneten Paaren der Ständer (2) verbunden sind, wobei die Querträger (3) eine Ruheebene (10) tragen und an mindestens zwei an ihren Enden befindlichen Verbindungsabschnitten (3a) mit zwei Ständern durch zwei Bügel (4) verbunden sind.

## Revendications

1. Structure portante modulaire, comprenant au moins deux montants parallèles (2) et au moins une traverse (3), munie d'un axe longitudinal (x), reliée amovible aux montants (2) au niveau d'au moins une partie de raccordement (3a) projetée pour entrer en contact avec une partie superficielle (2a) d'au moins l'un desdits au moins deux montants (2), ladite au moins une traverse (3) étant reliée au montant (2) via des moyens de fixation, les moyens de fixation comprenant au moins un support (4) muni d'une partie de jonction (4a) et d'une partie de fixation (4b) ; le support (4) étant projeté pour être fixé de façon amovible, par sa partie de fixation (4b), à la traverse (3) ;
le support (4) consiste en un élément fuselé et allongé présentant un double coude transversal de 90° environ, définissant deux sections consécutives (40, 42) parallèles et raccordées l'une à l'autre via une section (41) qui leur est perpendiculaire, la partie de fixation (4b) étant déterminée par une première (40) des deux sections, la partie de jonction (4a) étant déterminée par la section perpendiculaire (41) et par une seconde section (42) des sections parallèles ; **caractérisée en ce que**
chacun desdits au moins deux montants (2) comprend au moins un siège (8) projeté pour recevoir au moins une section (41) de la partie de jonction (4a) du support (4), au moins une partie du siège (8) étant réalisée sur une surface du montant (2), le siège (8) se situant près de la partie superficielle (2a) du montant (2) ; ladite au moins une traverse (3) présente au moins un logement débouchant (5) réalisé sur la traverse (3) au niveau de sa partie de raccordement (3a), de sorte que le logement débouchant (5) se retrouve en face du siège (8) ; la section perpendiculaire (41) dudit support (4) passant à travers le logement débouchant (5) et le siège (8).

2. Structure selon la revendication 1, **caractérisée en ce que** ledit au moins un support (4) est projeté pour s'insérer, au niveau de sa partie de jonction (4a), dans un logement (5) et un siège (8), avec sa partie de fixation (4b) positionnée contre la traverse (3), de manière qu'au moins la partie de raccordement (3a) de la traverse (3), où le logement se situe (5), est comprise entre la partie superficielle (2a) du montant (2) et la partie de fixation (4b) du support (4).

3. Structure selon la revendication 2, **caractérisée en ce que** la partie de fixation (4b) du support (4) et la partie de raccordement (3a) de la traverse (3) sont fixées l'une à l'autre par un élément de raccordement amovible.

4. Structure selon la revendication 3, **caractérisée en ce que** : la partie de fixation (4b) du support (4) présente une fente débouchante (6) en face d'un trou débouchant (7) réalisé sur la partie de raccordement (3a) de la traverse (3) ; l'élément de raccordement amovible consistant en une vis (9) qui est introduite dans la fente débouchante (6) et qui se visse dans le trou débouchant (7).

5. Structure selon l'une quelconque des revendications précédentes, **caractérisée en ce qu'**elle comprend quatre montants (2), disposés à des sommets d'un quadrilatère rectangle, et deux traverses parallèles (3) raccordées amovibles à des paires de montants (2) situés juste en face, les traverses (3) soutenant un plan d'appui (10) et étant raccordées, au niveau d'au moins deux parties de raccordement (3a) situées à leurs extrémités, à deux montants via deux supports (4).
